# EUROPEAN PATENT SPECIFICATION

(11) **EP 2 856 547 B1**
(45) Date of publication and mention of the grant of the patent: **19.09.2018**
(21) Application number: 13730302.0
(22) Date of filing: 20.05.2013
(51) Int. Cl.: H01M 8/0258, H01M 8/10, H01M 8/0254, H01M 8/0267, H01M 8/2483, H01M 8/1018, H01M 8/241, H01M 8/026

(54) **A BIPOLAR PLATE FOR A FUEL CELL**
BIPOLARE PLATTE FÜR EINE BRENNSTOFFZELLE
PLAQUE BIPOLAIRE POUR PILE À COMBUSTIBLE

(30) Priority: 28.05.2012 GB 201209385
(43) Date of publication of application: 08.04.2015
(73) Proprietor: Intelligent Energy Limited, Loughborough LE11 3GB (GB)
(72) Inventor: HOOD, Peter David, Loughborough LE11 3GB (GB)
(74) Representative: Creation IP Ltd
(86) International application number: PCT/GB2013/051313
(87) International publication number: WO 2013/178989

(56) References cited:
- EP-A2- 1 286 404
- WO-A1-95/17772
- WO-A1-2012/035584
- DE-A1-102006 044 763

## Description

The present disclosure relates to the field of bipolar plates for fuel cells.

Conventional electrochemical fuel cells convert fuel and oxidant, generally both in the form of gaseous streams, into electrical energy and a reaction product. A common type of electrochemical fuel cell for reacting hydrogen and oxygen comprises a polymeric ion (proton) transfer membrane, with fuel and air being passed over respective sides of the membrane. Protons (i.e. hydrogen ions) are conducted through the membrane, balanced by electrons conducted through a circuit connecting the anode and cathode of the fuel cell. To increase the available voltage, a stack may be formed comprising a number of such membranes arranged with separate anode and cathode fluid flow paths. Such a stack is typically in the form of a block comprising numerous individual fuel cell plates held together by end plates at either end of the stack.

Because the reaction of fuel and oxidant generates heat as well as electrical power, a fuel cell stack requires cooling once an operating temperature has been reached. Cooling may be achieved by forcing air through the cathode fluid flow paths. In an open cathode stack, the oxidant flow path and the coolant path are the same, i.e. forcing air through the stack both supplies oxidant to the cathodes and cools the stack. EP1286404 (A2) discloses a fuel cell that includes a separator between unit cells adjacent to each other. The separator includes an air pass on a front surface side abutting at least on a cathode of the unit cell and it includes a cooling space supplied with air and water on the rear side thereof to cool the unit cell with latent heat of water evaporation by heat of the unit cell transmitted to the cooling space. DE102006044763 (A1) discloses a plate that has molded articles into which several recesses are attached in different transforming depths. The molded articles are connected with each other at the recesses corresponding to each other and lying together. Channels attached to the molded articles form outer flow fields with the molded articles connected with each other. WO2012035584 (A1) discloses a separator for a fuel cell, positioned to be in contact with a laminated body including a membrane electrode assembly, comprising: a gas supply path forming section for forming with the laminated body a gas supply baths that has a blocked end section on the downstream side in the gas flow direction and which is a gas supply path; a gas discharge path forming section for forming with the laminated body a gas discharge path that has a blocked end section on the upstream side of the gas flow direction and which is a gas discharge path; and a gas travel path forming section for forming with the laminated body a gas travel path that has a smaller cross-sectional area that the gas supply path and the gas discharge path, and which is a gas travel path for making gas inside the gas supply path travel to the gas discharge path.

According to the invention, there is provided a bipolar plate as defined in the appended claims.

In this way a common coolant/oxidant can be used for both cooling the plates and providing the oxidant to the cathode side of the electrode without requiring any complicated passageways or conduits.

A description is now given, by way of example only, with reference to the accompanying drawings, in which:
Figure 1 shows a bipolar plate for illustrative purposes only;
Figures 2 to 4 show schematically how a fuel cell plate assembly can be built up;
Figure 5 shows a section view of a second bipolar plate positioned on top of the fuel cell plate assembly of Figure 4;
Figures 6 to 12 illustrate schematically how a fuel cell plate assembly can be constructed according to an embodiment of the invention;
Figure 13 illustrates schematically how a fuel cell stack can be put together according to an embodiment of the invention;
Figure 14 illustrates schematically how a fuel cell stack can be put together according to an alternative embodiment of the invention;
Figure 15 illustrates a fuel cell stack according to an embodiment of the invention; and
Figure 16 illustrates a bipolar plate according to one embodiment of the invention.

One or more embodiments disclosed herein relate to a bipolar plate for a fuel cell, the bipolar plate having an anode sheet defining an outer anode surface, and a cathode sheet defining an outer cathode surface. A cavity between the anode sheet and the cathode sheet that is configured to receive coolant/oxidant for cooling the anode and cathode sheets and also provide at least a portion of the coolant/oxidant to the exterior of the cathode sheet through one or more openings in the cathode sheet. In this way a common coolant/oxidant can be used for both cooling the plates and providing the oxidant to the cathode side of the electrode without requiring any complicated passageways or conduits.

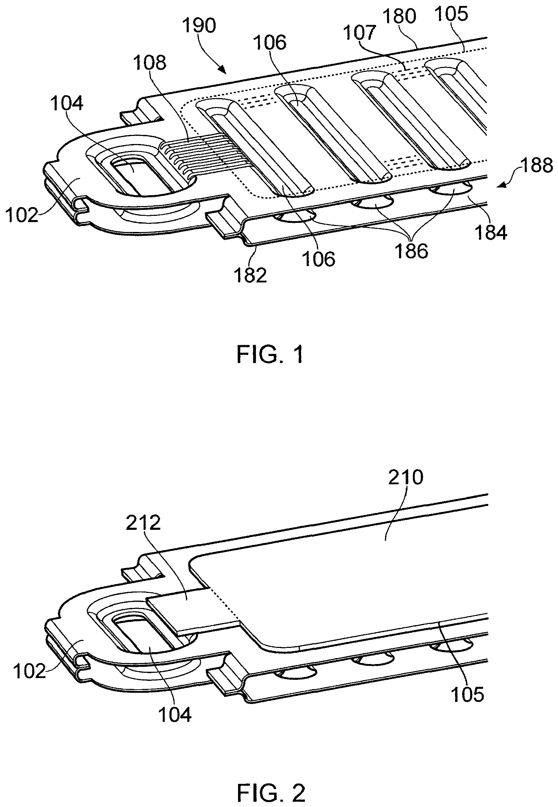

Figure 1 shows one end of a bipolar plate 102 for illustrative purposes only.

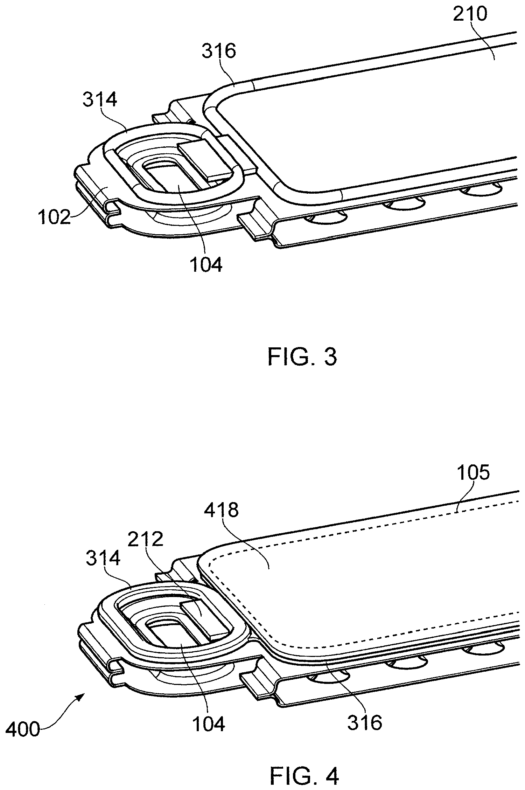

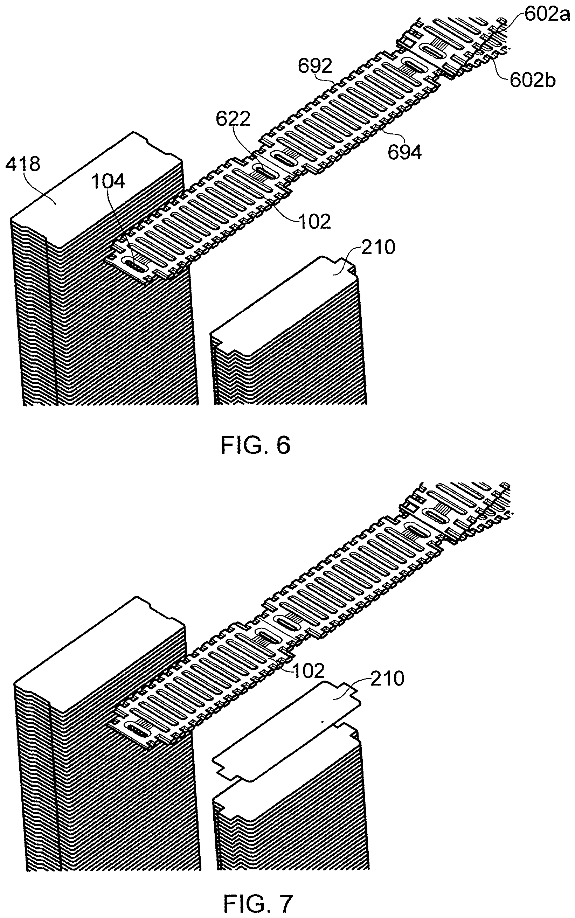

The end of the bipolar plate 102 that is shown in Figure 1 has a port 104. It will be appreciated that the other end of the bipolar plate 102 can also have a port, as shown in Figure 6. The port 104 is for receiving a fluid, such as hydrogen, that is to be provided to an active area of an electrode. The footprint of the active area of an electrode is shown with reference 105 in Figure 1, even though the electrode itself is not shown. The electrode is described in more detail below with reference to Figure 4.

As is known in the art, the active area 105 is the area of the gas diffusion layers (GDLs) that are in contact with the electrode surfaces such that the electrodes are provided with the necessary reactant gasses to promote proton exchange through the membrane.

The port 104 receives the fluid in a direction that is through the thickness of the bipolar plate 02. In addition to providing the fluid to the electrode, the port 104 also passes the fluid to an adjacent fuel cell assembly in a fuel cell stack as the ports of the bipolar plates are aligned when the stack is constructed.

In this example, the bipolar plate 102 has a plurality of fluid flow channels 106, which are discontinuous and extend across a lateral width of the bipolar plate 102. In this way, the fluid can be laterally dispersed across the width of the active area 105 when the fluid enters the fluid flow channels 106.

As will be discussed in more detail below, the fluid passes along the longitudinal length of the bipolar plate 102 through a gas diffusion layer. However, one or more optional port channels 108 can provide a fluid connection between the port 104 and the active area 105. The port channels 108 can be provided as grooves in the bipolar plate 102. The relationship between the port channels 108 and the fluid diffusion layer will be described in more detail below with reference to Figure 2.

In addition, one or more optional connecting channels 107 can also transport the fluid between successive fluid flow channels 106 along the length of the bipolar plate 102. Such connecting channels 107 can also be provided as grooves in the bipolar plate 102. The connecting channels 107 may alternate between connecting different ends of the fluid flow channels 106 so as to provide a winding or inter-digitized path along the longitudinal length of the bipolar plate 02. This can encourage the fluid to penetrate a large proportion of the fluid diffusion layer so that it is presented evenly to the electrode.

The bipolar plate comprises an anode sheet 180 and a cathode sheet 182. The outer surface of the anode sheet 180 will be referred to as an anode surface and the outer surface of the cathode sheet 182 will be referred to as a cathode surface.

There is a cavity 184 between the anode sheet 180 and the cathode sheet 182. In some examples, the anode sheet 180 and the cathode sheet 182 can be individually press moulded and stamped, before being spot welded together to provide the bipolar plate 102 of Figure 1, thereby defining the cavity 184 between the two sheets 180, 182.

The fluid flow channels 106 in the cathode sheet 184 include at least one opening 186 that extends between the cathode surface and the cavity 184. The opening puts the cavity 182 in fluid communication with the cathode surface. In this example, each fluid flow channel 106 in the cathode sheet 182 is punched through at each end so as to provide an inlet opening from the cavity 184 to the cathode surface and an outlet opening from the cathode surface to the cavity 184. The fluid flow channel 106 extends between the inlet opening and the outlet opening. The inlet opening will be the opening in the fluid flow channel 106 that is nearest to the side of the bipolar plate that receives the coolant/oxidant. Similarly, the outlet opening will be the opening in the fluid flow channel 106 that is furthest from the side of the bipolar plate that receives the coolant/oxidant.

Coolant/oxidant can pass into the cavity 184 through one or more coolant/oxidant inlet ports in a first peripheral edge 188 of the bipolar plate 102. Some of the coolant/oxidant that enters the coolant/oxidant inlet port then passes through the cavity 184 and out of one or more coolant/oxidant outlet ports in a second peripheral edge 190 of the bipolar plate 102. In addition, some of the coolant/oxidant that enters the cavity 184 passes through an inlet opening in a fluid flow channel 106 and is exposed to the cathode surface of the bipolar plate 102. The coolant/oxidant that passes straight through the cavity 184 can cool the anode and cathode sheets 180, 182. The second peripheral edge 190 of the bipolar plate is opposite to the first peripheral edge 88 of the bipolar plate in this example.

The bipolar plate defines two flow paths between the coolant/oxidant inlet port and the coolant/oxidant outlet port: a first flow path that is entirely enclosed by both the anode sheet 180 and the cathode sheet 182; and a second flow path that passes through two openings 186 in the cathode sheet 182 so as to expose the coolant/oxidant to the cathode surface of the cathode plate 182.

As will be appreciated from the description that follows, the coolant/oxidant that is exposed to the cathode surface can diffuse through a cathode gas diffusion layer (GDL) in order to provide oxidant to the cathode of the membrane electrode assembly (MEA). Any coolant/oxidant that does not enter the cathode GDL can pass back into the cavity 184 through the outlet opening in the fluid flow channel 106, before exiting the bipolar plate 102 through the second peripheral edge 190 of the bipolar plate 102.

In this way, the first peripheral edge 188 can provide a common inlet for coolant/oxidant, which can, depending upon its path through the bipolar plate 102 to the second peripheral edge 190, both cool the anode and cathode sheets 180, 182 and provide oxidant to the cathode GDL of a neighbouring MEA.

The fluid flow channels 106 in the cathode sheet 182 may be referred to as a coolant/oxidant distribution structure having at least one profiled portion (the sides of the fluid flow channels that extend away from the plane of the cathode sheet 182) and at least one punched through section (the openings 186 in the ends of the fluid flow channels 106). The profiled section of the coolant/oxidant distribution structure in this example abuts corresponding fluid flow channels 106 in the anode sheet 180 thereby providing support for the cavity 184 between the cathode sheet 182 and anode sheet 180.

In this example, the bipolar plate 102 has a single coolant/oxidant inlet port and a single coolant/oxidant outlet port that extends for most of the length of the bipolar plate 102. This is in contrast to the bipolar plate shown in Figure 6 that has a plurality of coolant/oxidant inlet ports and coolant/oxidant outlet ports defined by corrugations along the sides of the anode and cathode sheets.

It will be appreciated that in some examples the openings 186 through the cathode sheet 182 not need be provided in pairs as the coolant/oxidant can be consumed at the electrode. Therefore, a flow path from the cathode surface to the coolant/oxidant outlet port may not be required and the flow path to the cathode surface can be provided as a dead-end.

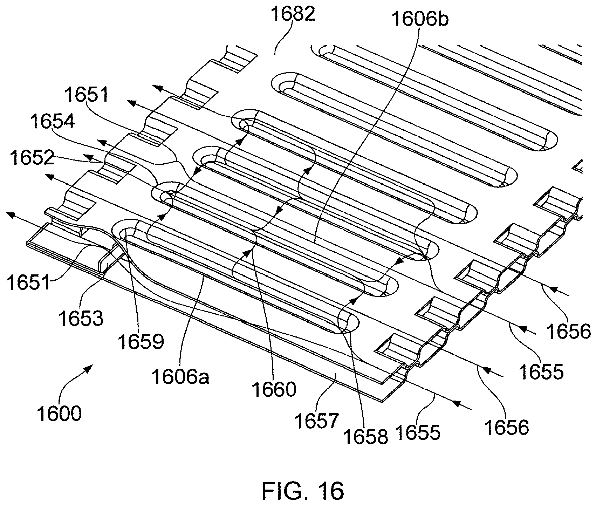

Another example of an arrangement of the openings 186 in the cathode sheet 182 is described below with reference to Figure 16, which is an embodiment of the invention.

The fluid flow channels 106 in the anode sheet 180 do not have openings as coolant oxidant is not required at the anode side of the MEA.

Figures 2 to 4 show how the bipolar plate 102 of Figure 1 can be built up into a fuel cell plate assembly. Figure 2 shows a first fluid diffusion layer 210 placed over the bipolar plate 102. Figure 3 shows adhesive 314, 316 dispensed over the bipolar plate 02 and first fluid diffusion layer 210. Figure 4 shows a laminate layer 418, which includes a membrane electrode assembly and a second fluid diffusion layer, placed over the first fluid diffusion layer and adhesive 316. Further details are provided below.

Figure 2 shows the fluid diffusion layer 210 located on the bipolar plate 102 of Figure 1. The fluid diffusion layer is typically known as a gas diffusion layer (GDL), and in this example will be referred to as an anode GDL 210 as it provides gas to the active area of the anode side of the electrode.

The anode GDL 210 has an extending region 212 that extends between the port 104 of the bipolar plate 102 and the active area 105. The tab 212 is outside the footprint of the active area 105. The extending region will be referred to as a tab 212. The tab 212 extends from the main body of the anode GDL 210, which in this example is generally co-located with the active area 105. The tab 212 of the anode GDL can communicate the hydrogen received at the port 104 to the active area 105. As identified above, the port channels 108 shown in Figure 1 can also communicate the hydrogen from the port 104 to the active area 105. However, it will be appreciated that these port channels 108 are optional as the transport of hydrogen can take place solely through the anode GDL 210. Similarly, the connecting channels 107 of Figure 1 are also optional as the anode GDL 210 can be the sole means for communicating the hydrogen between the fluid flow channels 106.

Figure 3 shows two tracks of adhesive 314, 316 deposited on the bipolar plate 102 and anode GDL 210 of Figure 2. A first track of adhesive 314 provides a continuous loop around the port 104 and passes over the tab 212 of the anode GDL 210. A second track of adhesive 316 is deposited on the bipolar plate 102 around the outside of the anode GDL 210, which also passes over the tab 212 of the anode GDL 210. In this way, the second track of adhesive 316 is positioned so that it provides a seal around the anode GDL 210 when the membrane electrode assembly is located on the partial fuel cell plate assembly.

The adhesive is selected such that penetration of the adhesive into the tab 212 of the anode GDL 210 is minimal, thereby not significantly impeding fluid transport through the anode GDL 210.

In other examples, molded sub-gaskets can be used instead of the adhesive. For example, a molded sub-gasket could be provided with the laminate layer 418 that is discussed below with reference to Figure 4.

Figure 4 shows a fuel cell plate assembly 400 in which a laminate layer 418 has been added to the partial fuel cell plate assembly of Figure 3. The laminate layer is a 4-layer membrane electrode assembly (MEA) and comprises a cathode fluid diffusion layer, a first layer of catalyst, an electrode membrane and a second layer of catalyst. The two catalyst layers and the electrode membrane can be referred to together as a membrane electrode assembly comprising the electrode.

The 4-layer MEA 418 is positioned over the second track of adhesive 316. It can be seen from Figure 4 that the second track of adhesive 316 has been displaced and spread out such that it abuts the first track of adhesive 314 thereby providing a seal around the tab 212 of the anode GDL 210 that is outside the port 104. Also, the two displaced adhesive tracks 314, 316 meet over the surface of the tab 212 thereby completing the anode enclosure and providing a global anode seal for the cell.

The active area is defined within the periphery of the 4-layer MEA 418 as an outer band of the 4-layer MEA 418 is positioned over the adhesive 316, which prevents the transport of the anode gas (hydrogen) to the electrode. It will be appreciated that the placement of the adhesive can be controlled so as to minimise the displacement of the adhesive into the intended active area 105.

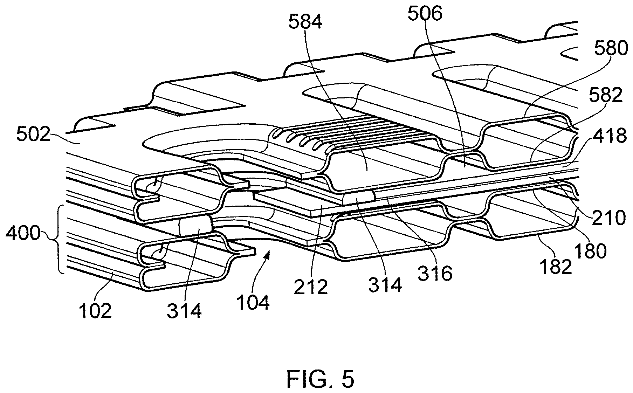

Figure 5 shows a section view of a second bipolar plate 502 positioned on top of the fuel cell plate assembly 400 of Figure 4. As is known in the art, a plurality of fuel cell plate assemblies 400 can be built up to form a fuel cell stack.

As shown in Figure 5, when the second bipolar plate 502 is positioned on top of the fuel cell assembly 400 it contacts the first track of adhesive 314 around the port 104 of the first bipolar plate 102. This first track of adhesive 314 therefore creates a seal around the ports of the two bipolar plates, underneath which the tab 212 of the anode GDL 210 passes. If the bipolar plate 102 includes port channels (as shown in Figure 1 with reference 108), then the tab 212 of the anode GDL 210 can be rigid enough to prevent slumping into the grooves of the port channels. This can be in contrast to prior art fuel cells, whereby a sub-gasket associated with the electrode is located above the grooves, and can sag into the grooves.

As can be seen in Figure 5, the anode surface of the anode sheet 180 of the first bipolar sheet 102 contacts the bottom surface of the anode GDL 210; the top surface of the anode GDL 210 contacts the bottom surface of the 4-layer MEA 418; and the top surface of the 4-layer MEA 418 contacts the cathode surface of the cathode sheet 582 of the second bipolar pate 502.

A section view of the cavity 584 between the anode sheet 580 and the cathode sheet 582 is shown in Figure 5. It will be appreciated from the description of Figure 1 that coolant/oxidant that enters the second bipolar plate 502 can access the fluid flow channels 506 in the cathode sheet 582 through openings that are not shown in Figure 5. In this way, the necessary oxidant is provided to the cathode GDL layer of the 4-layer MEA 418.

In some examples, the geometries of the bipolar plate 102 could include features that offer varying surface areas to be in contact with the GDLs 210, 418. For example, the dimensions of the fluid flow channels 106 may vary along the length of the bipolar plate 102 and/or across the width of the bipolar plate 102. In this way, the surface area of the cathode surface and/or anode that is in contact with the respective GDL 210, 418 between the fluid flow channels also varies along or across the bipolar plate 102. Alternatively, or additionally, the size of the openings 186 in the cathode sheet 182 may vary along the length of the bipolar plate 102 and/or across the width of the bipolar plate 102. Varying the dimensions of features of the bipolar plate 102 in this way can allow tuning of electrode activity across the surface of the electrode so as to improve electrode efficiency.

Figures 6 to 12 illustrate schematically how a fuel cell plate assembly can be constructed according to an embodiment of the invention.

Figure 6 illustrates a strip of bipolar plates 102 that are provided to a build point. It can be seen that the bipolar plates 102 in this example have two ports 104, 622. The first port 104 is an inlet as discussed in detail above. The second port 622 can be an outlet or an inlet. In some embodiments, the stoichiometric efficiency of the reaction with the hydrogen in the fuel cell is greater than one, and therefore the second port 622 should be used as an outlet in order to provide a through flow for product water management. In other embodiments, the second port 622 can also be an inlet if the stoichiometric efficiency and/or water management techniques permit.

The bipolar plates may comprise a separate anode sheet 602a and a cathode sheet 602b that are only joined together, for example resistance, laser or adhesive bonded together shortly before the bipolar plate 102 enters the build point. This is shown in Figure 6 as the anode sheets 602a and cathode sheets 602b are initially supplied separately.

As can also be seen in Figure 6, the longitudinal edges of the anode sheets and cathode sheets can be corrugated to provide additional support for the bipolar plate. For example corrugations in the anode sheet can align with and abut corrugations in the cathode sheet so as to provide additional support through the thickness of the bipolar plate. The corrugations in the anode sheet may be referred to as anode sheet corrugations 692 and the corrugations in the cathode sheet may be referred to as cathode sheet corrugations 694. The apertures defined by the anode sheet corrugations and the cathode sheet corrugations provide access to the cavity between the anode sheet and cathode sheet through multiple coolant/oxidant inlet ports and multiple coolant oxidant outlet ports.

Use of these corrugations can form a rigid plateau to resist deflection through the force applied by gaskets in the fuel cell assembly, but still allow an uninterrupted air passage for the cathode oxidant and cooling air.

Located on either side of the build point are a stack of anode GDLs 210 and a stack of 4- layer MEAs 418.

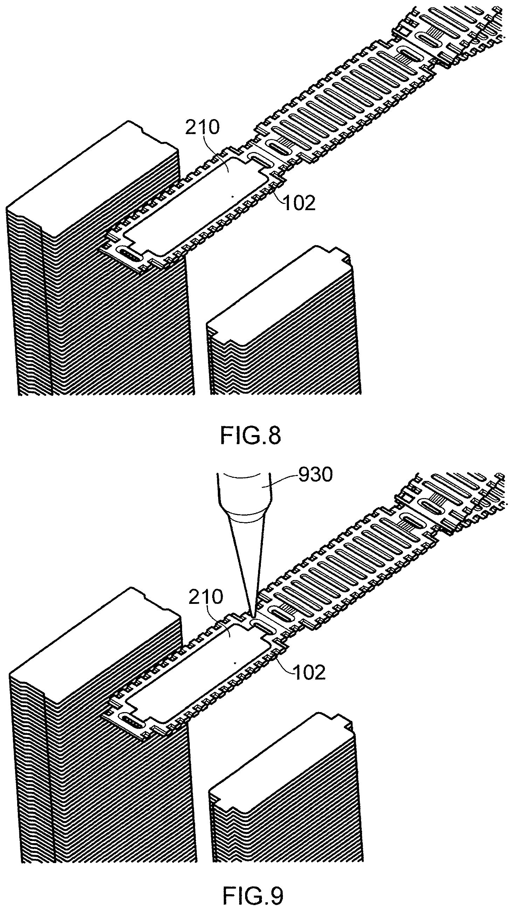

Figure 7 shows that a first anode GDL 210 has been taken from the stack ready for positioning on the bipolar plate in the same way as shown in Figure 2. It will be appreciated that this operation, and the operations that follow, can be automated. Figure 8 shows the anode GDL 210 located in position on the bipolar plate 102.

Figure 9 shows an adhesive dispenser 930 in position above the anode GDL 210 and bipolar plate 102.

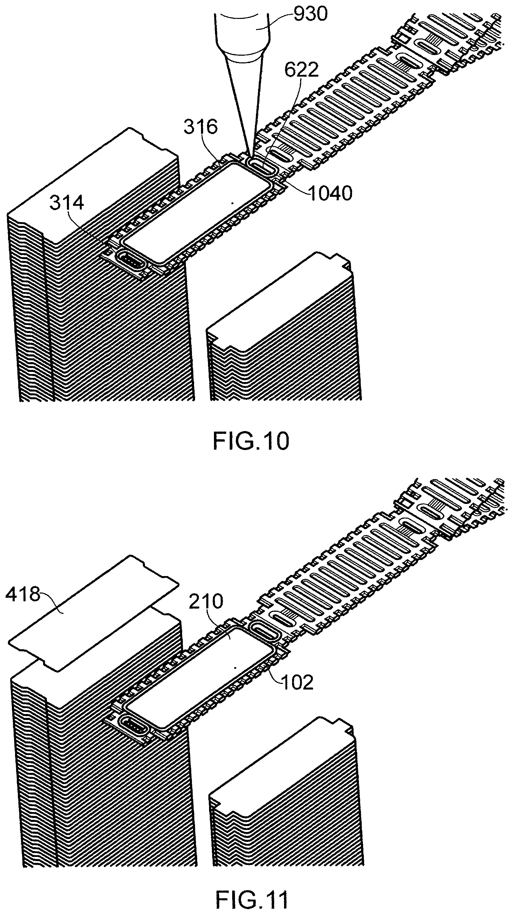

Figure 10 shows three tracks of adhesive 314, 316, 1040 that have been dispensed by the adhesive dispenser 930. The first track 314 and second track 316 are the same as those described with reference to Figure 3. Also shown in Figure 10 is a third track of adhesive 1040 that provides a continuous loop around the second port 622. This is in the same way that the first track of adhesive 314 provides a continuous loop around the first port 104.

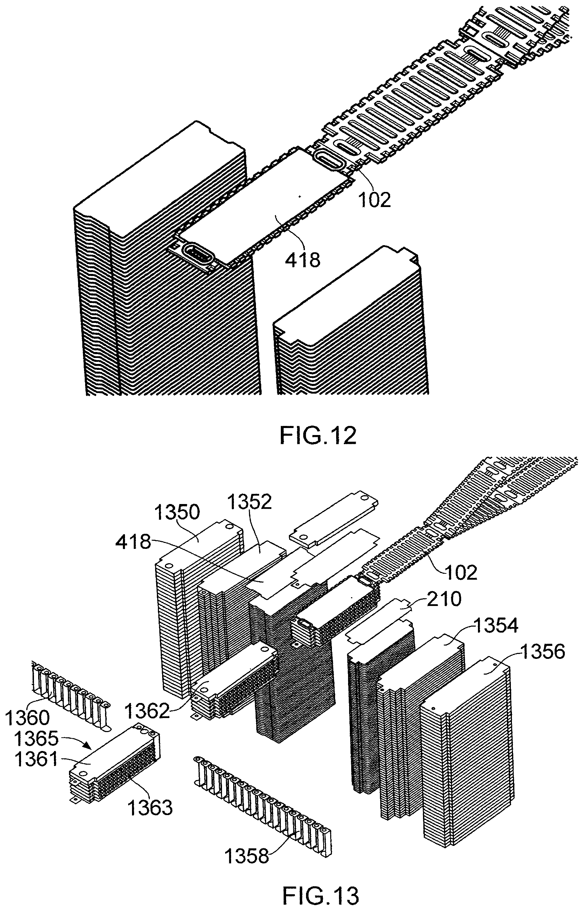

Figure 11 shows that a 4-layer EA has been taken from the stack ready for positioning on the bipolar plate 102 and anode GDL 210 in the same way as shown in Figure 4. Figure 12 shows the 4-layer MEA 418 located in position on the bipolar plate 102 and anode GDL 210.

It will be appreciated that each of the construction steps illustrated by Figures 6 to 12 can be performed at the same build point.

Figure 13 develops the method of construction illustrated by Figure 6 to 12 such that a fuel cell stack can be put together. Figure 13 illustrates a strip of bipolar plates 102, a stack of anode GDLs 210 and a stack of 4-layer MEAs 418 that are the same as those illustrated in Figures 6 to 12. In addition, Figure 13 shows two stacks of components 1350, 1352 for a top end plate of the fuel cell stack and two stacks of components 1354, 1356 for a bottom end plate of the fuel cell stack. Plates from the stacks 1354, 1356 for the bottom end plate are located at the build point before the construction of the fuel cell plate assemblies is begun, and plates from the stacks 1350, 1352 for the top end plate are located on top of the fuel cell assemblies at the build point when the fuel cell stack has been built to the desired size. The fuel cell stack can then be moved from the build point, as shown with reference 1362 in Figure 13.

Finally, clips 1358, 1360 can be attached to each side of the fuel cell stack 1362 to keep the fuel cell plate assemblies together at the intended working dimension in order to provide a completed fuel cell stack 1361.

One side face of the fuel cell stack 1361 can be referred to as a coolant/oxidant inlet face 1363, which comprises the inlet ports in the first peripheral edges of the bipolar plates. The opposing side face can be referred to as a coolant/oxidant outlet face 1365, which comprises the outlet ports in the second peripheral edges of the bipolar plates. In accordance with the above description, it will be appreciated that oxidant enters the fuel cell stack through the coolant/oxidant inlet face 1363, either passes through the cavity to cool the anode and cathode sheets or is exposed to the cathode GDL through openings in the cathode sheet, before any unconsumed coolant/oxidant exits the fuel cell stack though the coolant/oxidant outlet face 1365.

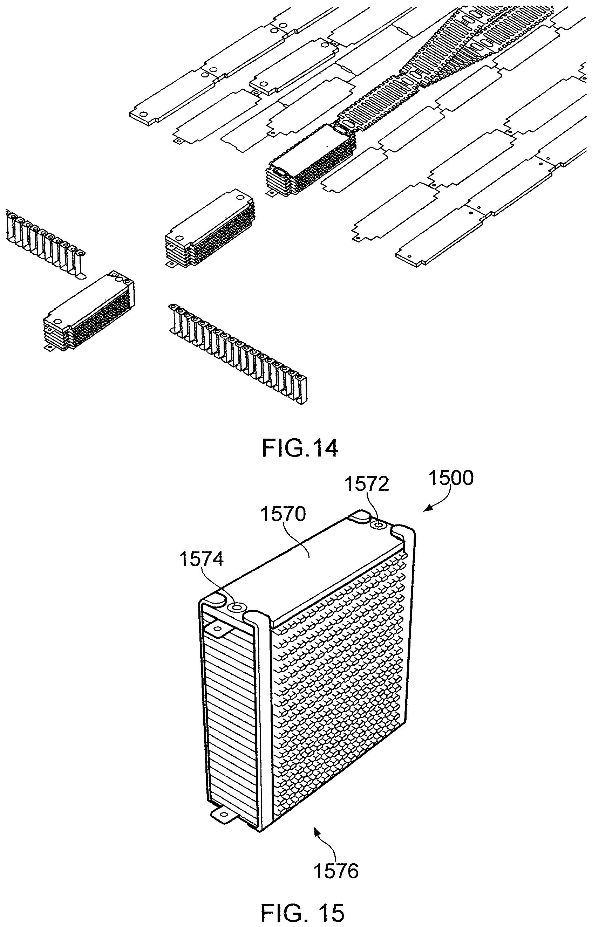

Figure 14 illustrates an alternative method for constructing a fuel cell stack according to an embodiment of the invention. In this example, the anode GDL, 4-layer MEAs and components for the end plates are strip supplied and segmented just before a pick and place process.

Figure 15 illustrates a fuel cell stack 1500 according to an embodiment of the invention. The top end plate 1570 of the fuel cell stack includes two apertures 1572, 1574 that are respectively in fluid connection with the ports (not shown in Figure 15) at each end of the fuel cell plate assemblies. It will be appreciated that similar apertures may be provided in the bottom end plate 576 if required.

Figure 16 illustrates a bipolar plate 1600 according to one embodiment of the invention. In Figure 16, the cathode sheet 1682 is shown on top, which is in contrast to the bipolar plate 102 of Figure 1 where the cathode sheet is shown on the bottom. The arrangement of the openings in the cathode sheet of the bipolar plate of Figure 6 are different to that shown in Figure 1 and can improve the exposure of the air at the cathode surface of the cathode sheet 1682. Also included in the bipolar plate 1600 of Figure 16 are optional baffles 1653 to impede the direct air flow between the air inlet ports and the air outlet ports, thereby further improving the air flow across the cathode surface of the cathode plate 1682. Further details are provided below.

In this example, the first fluid flow channel 1606a has an inlet opening 1658 in the cathode sheet 1682 and an opposing closed end 1659. The closed end does not have an outlet opening. The second fluid flow channel 1606b has an outlet opening 1654 in the cathode sheet 1682 and an opposing closed end with no inlet opening. With this arrangement of openings 11658, 1654, air passes from the first fluid channel 1606a to the second fluid flow channel 1606b through the adjacent gas diffusion layer (GDL) (not shown in Figure 16). The direction of this air flow is shown by arrows 1660 in Figure 16. Causing the air to flow between fluid flow channels 1606a, 1606b in this way can improve the uniformity with which the air is provided to the cathode side of the associated membrane electrode assembly (not shown in Figure 16).

Optionally, an obstruction 1653 to direct air flow between the air inlet ports on a first peripheral edge of the bipolar plate and the air outlet ports on a second peripheral edge of the bipolar plate can be provided in order to increase the air pressure at the air inlet opening 1658 thereby encouraging the air to flow through the GDL from the first fluid flow channel 1606a to the second fluid flow channel 1606b. The obstruction in this example is a baffle 1653 that provides a restriction to air flow from the cavity 1657 between the anode sheet and cathode sheet to the air outlet port.

The bipolar plate 1600 of Figure 16 can be considered as providing forced diffusion through the cathode GDL. At least in part, this can be achieved by the addition of a baffle plate 1653 so as to partly obscure a cooling channel 1657 that provides a direct flow path between the air inlet ports and the air outlet ports. This flow path is direct inasmuch as it does not pass through any openings 11658, 1654 in the cathode sheet 1682. The bipolar plate 1600 has three flow paths between the air inlet port and the air outlet port:
a first flow path 1655, 1651 that is entirely enclosed by both the anode sheet 180 and the cathode sheet 182, the first flow path encounters a baffle plate 1653 as discussed above;
a second flow path 1656 that is entirely enclosed by both the anode sheet 180 and the cathode sheet 182, the second flow path does not encounter a baffle plate 1653 and may be referred to as a through-cooling channel; and
a third flow path 1655, 1660, 1652 that passes through an air inlet opening 1658 in a first fluid flow channel 1606a of the cathode sheet 1682 and an air outlet opening 1654 in a second fluid flow channel 1606b so as to expose the air to the cathode surface of the cathode plate 1682.

The first flow path 1655, 1651 and the third flow path 1655 can run at a slightly elevated pressure compared to the second (through-cooling) channel 1656. The openings/apertures 1658, 1654 can be diametrically featured across the bipolar plate 1600, in order to become inlet and outlet apertures for the galleries in the cathode flow field. Alternate fluid flow channels 1606a may be provided with air inlet openings 1658. The other/interleaved fluid flow channels 1606b may be provided with air outlet openings 1654.

The subsequent pressure differential between air inlet and outlet openings 1658 and 1654 can promote air flow across the cathode surface of the bipolar plate 1606. Similarly, baffle plates 1653 can be positioned in alternate cooling channels 1656 along the bipolar plate 1600.

The embodiment of Figure 16 can enable the proportional tuning of three variables:
1. the amount of through-cooling air along the second flow path 1656;
2. the amount of diffusion air along the third flow path 1660; and
3. the ratio of the cooling/reaction air along the first flow path 1651 to the diffusion air along the third flow path 1660.

Figure 7 shows that a first anode GDL 210 has been taken from the stack ready for positioning on the bipolar plate in the same way as shown in Figure 2. It will be appreciated that this operation, and the operations that follow, can be automated. Figure 8 shows the anode GDL 210 located in position on the bipolar plate 102.

Figure 9 shows an adhesive dispenser 930 in position above the anode GDL 210 and bipolar plate 102.

Figure 10 shows three tracks of adhesive 314, 316, 1040 that have been dispensed by the adhesive dispenser 930. The first track 314 and second track 316 are the same as those described with reference to Figure 3. Also shown in Figure 10 is a third track of adhesive 1040 that provides a continuous loop around the second port 622. This is in the same way that the first track of adhesive 314 provides a continuous loop around the first port 104.

Figure 11 shows that a 4-layer MEA has been taken from the stack ready for positioning on the bipolar plate 102 and anode GDL 210 in the same way as shown in Figure 4. Figure 12 shows the 4-layer MEA 418 located in position on the bipolar plate 102 and anode GDL 210.

It will be appreciated that each of the construction steps illustrated by Figures 6 to 12 can be performed at the same build point.

Figure 13 develops the method of construction illustrated by Figure 6 to 12 such that a fuel cell stack can be put together. Figure 13 illustrates a strip of bipolar plates 102, a stack of anode GDLs 210 and a stack of 4-layer MEAs 418 that are the same as those illustrated in Figures 6 to 12. In addition, Figure 13 shows two stacks of components 1350, 1352 for a top end plate of the fuel cell stack and two stacks of components 1354, 1356 for a bottom end plate of the fuel cell stack. Plates from the stacks 1354, 1356 for the bottom end plate are located at the build point before the construction of the fuel cell plate assemblies is begun, and plates from the stacks 1350, 1352 for the top end plate are located on top of the fuel cell assemblies at the build point when the fuel cell stack has been built to the desired size. The fuel cell stack can then be moved from the build point, as shown with reference 1362 in Figure 13.

Finally, clips 1358, 1360 can be attached to each side of the fuel cell stack 1362 to keep the fuel cell plate assemblies together at the intended working dimension in order to provide a completed fuel cell stack 1361.

One side face of the fuel cell stack 1361 can be referred to as an coolant/oxidant inlet face 1363, which comprises the inlet ports in the first peripheral edges of the bipolar plates. The opposing side face can be referred to as an coolant/oxidant outlet face 1365, which comprises the outlet ports in the second peripheral edges of the bipolar plates. In accordance with the above description, it will be appreciated that oxidant enters the fuel cell stack through the coolant/oxidant inlet face 1363, either passes through the cavity to cool the anode and cathode sheets or is exposed to the cathode GDL through openings in the cathode sheet, before any unconsumed coolant/oxidant exits the fuel cell stack though the coolant/oxidant outlet face 1365.

Figure 14 illustrates an alternative method for constructing a fuel cell stack according to an embodiment of the invention. In this example, the anode GDL, 4-layer MEAs and components for the end plates are strip supplied and segmented just before a pick and place process.

Figure 15 illustrates a fuel cell stack 1500 according to an embodiment of the invention. The top end plate 1570 of the fuel cell stack includes two apertures 1572, 1574 that are respectively in fluid connection with the ports (not shown in Figure 15) at each end of the fuel cell plate assemblies. It will be appreciated that similar apertures may be provided in the bottom end plate 1576 if required.

Figure 16 illustrates a bipolar plate 1600 according to another embodiment of the invention. In Figure 16, the cathode sheet 1682 is shown on top, which is in contrast to the bipolar plate 102 of Figure 1 where the cathode sheet is shown on the bottom. The arrangement of the openings in the cathode sheet of the bipolar plate of Figure 16 are different to that shown in Figure 1 and can improve the exposure of the air at the cathode surface of the cathode sheet 1682. Also included in the bipolar plate 1600 of Figure 16 are optional baffles 1653 to impede the direct air flow between the air inlet ports and the air outlet ports, thereby further improving the air flow across the cathode surface of the cathode plate 1682. Further details are provided below.

In this example, the first fluid flow channel 1606a has an inlet opening 1658 in the cathode sheet 1682 and an opposing closed end 1659. The closed end does not have an outlet opening. The second fluid flow channel 1606b has an outlet opening 1654 in the cathode sheet 1682 and an opposing closed end with no inlet opening. With this arrangement of openings 11658, 1654, air passes from the first fluid channel 1606a to the second fluid flow channel 1606b through the adjacent gas diffusion layer (GDL) (not shown in Figure 16). The direction of this air flow is shown by arrows 1660 in Figure 16. Causing the air to flow between fluid flow channels 1606a, 1606b in this way can improve the uniformity with which the air is provided to the cathode side of the associated membrane electrode assembly (not shown in Figure 16).

Optionally, an obstruction 1653 to direct air flow between the air inlet ports on a first peripheral edge of the bipolar plate and the air outlet ports on a second peripheral edge of the bipolar plate can be provided in order to increase the air pressure at the air inlet opening 1658 thereby encouraging the air to flow through the GDL from the first fluid flow channel 1606a to the second fluid flow channel 1606b. The obstruction in this example is a baffle 1653 that provides a restriction to air flow from the cavity 1657 between the anode sheet and cathode sheet to the air outlet port.

The bipolar plate 1600 of Figure 16 can be considered as providing forced diffusion through the cathode GDL. At least in part, this can be achieved by the addition of a baffle plate 1653 so as to partly obscure a cooling channel 1657 that provides a direct flow path between the air inlet ports and the air outlet ports. This flow path is direct inasmuch as it does not pass through any openings 11658, 1654 in the cathode sheet 1682.

The bipolar plate 1600 can be considered as having three flow paths between the air inlet port and the air outlet port:
a first flow path 1655, 1651 that is entirely enclosed by both the anode sheet 180 and the cathode sheet 182, the first flow path encounters a baffle plate 1653 as discussed above;
a second flow path 1656 that is entirely enclosed by both the anode sheet 180 and the cathode sheet 182, the second flow path does not encounter a baffle plate 1653 and may be referred to as a through-cooling channel; and
a third flow path 1655, 1660, 1652 that passes through an air inlet opening 1658 in a first fluid flow channel 1606a of the cathode sheet 1682 and an air outlet opening 1654 in a second fluid flow channel 1606b so as to expose the air to the cathode surface of the cathode plate 1682.

The first flow path 1655, 1651 and the third flow path 1655 can run at a slightly elevated pressure compared to the second (through-cooling) channel 1656. The openings/apertures 1658, 1654 can be diametrically featured across the bipolar plate 1600, in order to become inlet and outlet apertures for the galleries in the cathode flow field. Alternate fluid flow channels 1606a may be provided with air inlet openings 1658. The other/interleaved fluid flow channels 1606b may be provided with air outlet openings 1654.

The subsequent pressure differential between air inlet and outlet openings 1658 and 1654 can promote air flow across the cathode surface of the bipolar plate 1606. Similarly, baffle plates 1653 can be positioned in alternate cooling channels 1656 along the bipolar plate 1600.

The embodiment of Figure 16 can enable the proportional tuning of three variables:
1. the amount of through-cooling air along the second flow path 1656;
2. the amount of diffusion air along the third flow path 1660; and
3. the ratio of the cooling/reaction air along the first flow path 1651 to the diffusion air along the third flow path 1660.

## Claims

1. A bipolar plate (1600) for a fuel cell, the bipolar plate comprising:
an anode sheet (180) defining an anode surface
a cathode sheet (1682) defining a cathode surface; and
a cavity (1657) between the anode sheet (180) and the cathode sheet (1682),
wherein the cathode sheet (1682) comprises a coolant/oxidant distribution structure comprising at least one profiled portion for distributing the coolant/oxidant, a first punched through section that defines an inlet opening (1658) between the cavity (1657) and the cathode surface and a second punched through section that defines an outlet opening (1654) in the cathode sheet (1682) extending between the cathode surface and the cavity (1657),
wherein the cavity (1657) is configured to receive coolant/oxidant for cooling the anode and cathode sheets (180, 1682) and also provide at least a portion of the coolant/oxidant to the exterior of the cathode sheet (1682) through the inlet and outlet openings (1658, 1654),
wherein the cavity (1657) has at least one coolant/oxidant inlet port at a first peripheral edge (188) of the bipolar plate (1600) for receiving the coolant/oxidant, and the cavity (1657) has at least one coolant/oxidant outlet port at a second peripheral edge (190) of the bipolar plate (1600) for exhausting at least a portion of the coolant/oxidant,
wherein the coolant/oxidant distribution structure comprises a plurality of fluid flow channels, wherein:
a first fluid flow channel (1606a) comprises the inlet opening (1658) at one end of the first fluid flow channel (1606a) and is closed at the opposing end of the first fluid flow channel (1606a), wherein the inlet opening (1658) is an opening in the first fluid flow channel (1606a) that is nearest to a first peripheral edge (188) of the bipolar plate (1600) that receives the coolant/oxidant;
a second fluid flow channel (1606b) comprises the outlet opening (1654) at one end of the second fluid flow channel (1606b) and is closed at the opposing end of the second fluid flow channel (1606b), wherein the outlet opening (1654) is an opening in the second fluid flow channel (1606b) that is furthest from the first peripheral edge (188) of the bipolar plate (1600) that receives the coolant/oxidant,
the bipolar plate (1600) further comprising one or more restrictions (1653) to air flow in the cavity (1657) between the anode sheet (180) and the cathode sheet (1682) in order to increase the pressure of the coolant/oxidant at the inlet openings (1658) and three flow paths between the at least one coolant/oxidant inlet port and the coolant/oxidant outlet port:
a first flow path (1655, 1651) that is entirely enclosed by both the anode sheet (180) and the cathode sheet (1682), the first flow path encountering the one or more restrictions (1653);
a second flow path (1656) that is entirely enclosed by both the anode sheet (180) and the cathode sheet (1682), the second flow path not encountering the one or more restrictions (1653) and providing a through cooling channel; and
a third flow path (1655, 1660, 1652) to pass through the air inlet opening (1658) in the first fluid flow channel (1606a) of the cathode sheet (1682), and the air outlet openings (1654) in the second fluid flow channel (1606b) in the cathode sheet (1682) so as to expose the coolant/oxidant to the cathode surface of the cathode sheet.

2. The bipolar plate (1600) of claim 1, wherein the coolant/oxidant distribution structure comprises a fluid flow channel (106) extending between the inlet opening (1658) and the outlet opening (1654).

3. The bipolar plate (1600) of claim 1, wherein the one or more restrictions to air flow comprises a baffle (1653).

4. The bipolar plate (1600) of anyone of claims 1 to 3, wherein the dimensions of the fluid flow channels vary along the length of the bipolar plate (1600) and/or across the width of the bipolar plate (1600).

5. The bipolar plate (1600) of anyone of claims 1 to 4, wherein the profiled portion abuts the anode sheet (180), thereby providing support for the cavity (1657) between the anode sheet (180) and cathode sheet (1682).

6. The bipolar plate (1600) of anyone of claims 1 to 5, in which the at least one coolant/oxidant inlet port comprises an open peripheral edge of the cavity (1657) between the anode sheet (180) and the cathode sheet (1682).

7. The bipolar plate (1600) of anyone of claims 1 to 6, in which the at least one coolant/oxidant outlet port comprises an open peripheral edge of the cavity (1657) between the anode sheet (180) and the cathode sheet (1682).

8. The bipolar plate (1600) of anyone of claims 1 to 7, wherein the cathode sheet (1682) comprises cathode sheet corrugations (694) running along its longitudinal edges and the anode sheet (180) comprises anode sheet corrugations (692) running along its longitudinal edges, wherein the cathode sheet corrugations (694) abut the anode sheet corrugations (692) thereby defining a plurality of coolant/oxidant inlet ports to the cavity (1657) and a plurality of coolant/oxidant outlet ports from the cavity (1657).

9. The bipolar plate (1600) of any of claims 1 to 4, wherein the size of the openings (1658, 1654) in the cathode sheet (1682) vary along the length of the bipolar plate (1600).

10. A fuel cell plate assembly (400) comprising:
a bipolar plate (1600) according to any preceding claim;
an anode fluid diffusion layer (210); and
a laminate layer (418) comprising a cathode fluid diffusion layer and a membrane electrode assembly comprising an electrode.

11. A fuel cell stack (1361) comprising a plurality of the fuel cell plate assemblies (400) of claim 10.

## Patentansprüche

1. Bipolarplatte (1600) für eine Brennstoffzelle, wobei die Bipolarplatte umfasst:
ein Anodenblech (180), das eine Anodenoberfläche definiert ein Kathodenblech (1682), das eine Kathodenoberfläche definiert; und
einen Hohlraum (1657) zwischen dem Anodenblech (180) und dem Kathodenblech (1682),
wobei das Kathodenblech (1682) eine Kühlmittel/Oxidationsmittel-Verteilungsstruktur umfasst, die mindestens einen profilierten Abschnitt zum Verteilen des Kühlmittel/Oxidationsmittels umfasst, einen ersten durchgestanzten Abschnitt, der eine Einlassöffnung (1658) zwischen dem Hohlraum (1657) und der Kathodenoberfläche definiert, und einen zweiten durchgestanzten Abschnitt, der eine Auslassöffnung (1654) in dem Kathodenblech (1682) definiert, die sich zwischen der Kathodenoberfläche und dem Hohlraum (1657) erstreckt,
wobei der Hohlraum (1657) konfiguriert ist, um Kühlmittel/Oxidationsmittel zum Kühlen der Anoden- und Kathodenbleche (180, 1682) aufzunehmen und auch wenigstens einen Teil des Kühlmittels/Oxidationsmittels zum Äußeren der Kathodenblechs (1682) durch die Einlass- und Auslassöffnungen (1658, 1654) bereitzustellen,
wobei der Hohlraum (1657) mindestens eine Kühlmittel/Oxidationsmittel-Einlassöffnung an einer ersten Umfangskante (188) der Bipolarplatte (1600) zur Aufnahme des Kühlmittels/Oxidationsmittels aufweist, und der Hohlraum (1657) mindestens eine Kühlmittel/Oxidationsmittel-Auslassöffnung an einer zweiten Umfangskante (190) der Bipolarplatte (1600) zum Ausstoßen von zumindest einem Teil des Kühlmittels/Oxidationsmittels aufweist,
wobei die Kühlmittel/Oxidationsmittel-Verteilungsstruktur eine Vielzahl von Flüssigkeitsströmungskanälen umfasst, wobei:
ein erster Fluidströmungskanal (1606a) die Einlassöffnung (1658) an einem Ende des ersten Fluidströmungskanals (1606a) umfasst und an dem gegenüberliegenden Ende des ersten Fluidströmungskanals (1606a) geschlossen ist, wobei die Einlassöffnung (1658) eine Öffnung in dem ersten Fluidströmungskanal (1606a) ist, die einer ersten Umfangskante (188) der Bipolarplatte (1600) am nächsten ist, die das Kühlmittel/Oxidationsmittel aufnimmt;
ein zweiter Fluidströmungskanal (1606b) die Auslassöffnung (1654) an einem Ende des zweiten Fluidströmungskanals (1606b) umfasst und an dem gegenüberliegenden Ende des zweiten Fluidströmungskanals (1606b) geschlossen ist, wobei die Auslassöffnung (1654) eine Öffnung in dem zweiten Fluidströmungskanal (1606b) ist, die von der ersten Umfangskante (188) der Bipolarplatte (1600), die das Kühlmittel/Oxidationsmittel aufnimmt, am weitesten entfernt ist,
wobei die Bipolarplatte (1600) ferner eine oder mehrere Luftstrombegrenzer (1653) in dem Hohlraum (1657) zwischen dem Anodenblech (180) und dem Kathodenblech (1682) umfasst, um den Druck des Kühlmittels/Oxidationsmittels an den Einlassöffnungen (1658) und drei Flusswegen zwischen der zumindest einen Kühlmittel/Oxidationsmittel-Einlassöffnung und der Kühlmittel/Oxidationsmittel-Auslassöffnung zu erhöhen:
einen ersten Strömungsweg (1655, 1651), der vollständig sowohl von dem Anodenblech (180) als auch dem Kathodenblech (1682) umgeben ist, wobei der erste Strömungsweg auf den einen oder die mehreren Begrenzer (1653) trifft;
einen zweiten Strömungsweg (1656), der vollständig sowohl von dem Anodenblech (180) als auch dem Kathodenblech (1682) umgeben ist, wobei der zweite Strömungsweg nicht auf die eine oder mehreren Begrenzer (1653) trifft und einen Durchgangskühlkanal bereitstellt; und
einen dritten Strömungsweg (1655, 1660, 1652), um durch die Lufteinlassöffnung (1658) in dem ersten Fluidströmungskanal (1606a) des Kathodenblechs (1682) und die Luftauslassöffnungen (1654) in dem zweiten Fluidströmungskanal (1606b) in dem Kathodenblech (1682) hindurchzulaufen, um so das Kühlmittel/Oxidationsmittel der Kathodenoberfläche des Kathodenblechs auszusetzen.

2. Bipolarplatte (1600) nach Anspruch 1, wobei die Kühlmittel/Oxidationsmittel-Verteilungsstruktur einen Fluidströmungskanal (106) umfasst, der sich zwischen der Einlassöffnung (1658) und der Auslassöffnung (1654) erstreckt.

3. Bipolarplatte (1600) nach Anspruch 1, wobei der eine oder die mehreren Luftstrombegrenzer ein Ablenkblech (1653) umfassen.

4. Bipolarplatte (1600) nach einem der Ansprüche 1 bis 3, wobei die Abmessungen der Fluidflusskanäle entlang der Länge der Bipolarplatte (1600) und/oder über die Breite der Bipolarplatte (1600) variieren.

5. Bipolarplatte (1600) nach einem der Ansprüche 1 bis 4, wobei der profilierte Abschnitt an dem Anodenblech (180) anliegt, wodurch der Hohlraum (1657) zwischen dem Anodenblech (180) und dem Kathodenblech (1682) unterstützt wird.

6. Bipolarplatte (1600) nach einem der Ansprüche 1 bis 5, wobei die mindestens eine Kühlmittel/Oxidationsmittel-Einlassöffnung eine offene Umfangskante des Hohlraums (1657) zwischen dem Anodenblech (180) und dem Kathodenblech (1682) umfasst.

7. Bipolarplatte (1600) nach einem der Ansprüche 1 bis 6, wobei die mindestens eine Kühlmittel/Oxidationsmittel-Auslassöffnung eine offene Umfangskante des Hohlraums (1657) zwischen dem Anodenblech (180) und dem Kathodenblech (1682) umfasst.

8. Bipolarplatte (1600) nach einem der Ansprüche 1 bis 7, wobei das Kathodenblech (1682) Kathodenblechwellen (694) umfasst, die entlang dessen Längskanten verlaufen, und wobei das Anodenblech (180) Anodenblechwellen (692) umfasst, die entlang dessen Längskanten verlaufen, wobei die Kathodenblechwellen (694) an den Anodenblechwellen (692) anliegen und dadurch eine Mehrzahl von Kühlmittel/Oxidationsmittel-Einlassöffnungen zu dem Hohlraum (1657) und eine Mehrzahl von Kühlmittel/Oxidationsmittel-Auslassöffnungen aus dem Hohlraum (1657) ausbilden.

9. Bipolarplatte (1600) nach einem der Ansprüche 1 bis 4, wobei die Größe der Öffnungen (1658, 1654) in dem Kathodenblech (1682) entlang der Länge der Bipolarplatte (1600) variiert.

10. Brennstoffzellenplattenanordnung (400) umfassend:
eine Bipolarplatte (1600) nach einem der vorhergehenden Ansprüche;
eine Anodenfluid-Diffusionsschicht (210); und
eine Laminatschicht (418), die eine Kathodenfluid-Diffusionsschicht und eine Membranelektrodenanordnung umfasst, die eine Elektrode umfasst.

11. Brennstoffzellenstapel (1361), umfassend eine Mehrzahl der Brennstoffzellenplattenanordnungen (400) nach Anspruch 10.

## Revendications

1. Plaque bipolaire (1600) pour une pile à combustible, la plaque bipolaire comprenant :
une feuille d'anode (180) définissant une surface d'anode,
une feuille de cathode (1682) définissant une surface de cathode ; et
une cavité (1657) entre la feuille d'anode (180) et la feuille de cathode (1682),
dans laquelle la feuille de cathode (1682) comprend une structure de distribution de réfrigérant/oxydant comprenant au moins une partie profilée pour distribuer le réfrigérant/oxydant, une première section perforée qui définit une ouverture d'entrée (1658) entre la cavité (1657) et la surface de cathode et une seconde section perforée définissant une ouverture de sortie (1654) dans la feuille de cathode (1682) s'étendant entre la surface de cathode et la cavité (1657),
dans laquelle la cavité (1657) est configurée pour recevoir le réfrigérant/oxydant pour refroidir les feuilles d'anode et de cathode (180, 1682) et pour fournir au moins une partie du réfrigérant/oxydant à l'extérieur de la feuille de cathode (1682) via les ouvertures d'entrée et de sortie (1658, 1654),
dans laquelle la cavité (1657) présente au moins un orifice d'entrée de réfrigérant/oxydant au niveau d'un premier bord périphérique (188) de la plaque bipolaire (1600) pour recevoir le réfrigérant/oxydant, et la cavité (1657) présente au moins un orifice de sortie de réfrigérant/oxydant au niveau d'un second bord périphérique (190) de la plaque bipolaire (1600) pour évacuer au moins une partie du réfrigérant/oxydant,
dans laquelle la structure de distribution de réfrigérant/oxydant comprend une pluralité de canaux d'écoulement de fluide, dans laquelle :
un premier canal d'écoulement de fluide (1606a) comprend l'ouverture d'entrée (1658) au niveau d'une extrémité du premier canal d'écoulement de fluide (1606a) et est fermé à l'extrémité opposée du premier canal d'écoulement de fluide (1606a), l'ouverture d'entrée (1658) étant une ouverture dans le premier canal d'écoulement de fluide (1606a) la plus proche d'un premier bord périphérique (188) de la plaque bipolaire (1600) qui reçoit le réfrigérant/oxydant ;
un second canal d'écoulement de fluide (1606b) comprend l'ouverture de sortie (1654) au niveau d'une extrémité du second canal d'écoulement de fluide (1606b) et est fermé à l'extrémité opposée du second canal d'écoulement de fluide (1606b), l'ouverture de sortie (1654) étant une ouverture dans le second canal d'écoulement de fluide (1606b) qui est la plus éloignée du premier bord périphérique (188) de la plaque bipolaire (1600) qui reçoit le réfrigérant/oxydant,
la plaque bipolaire (1600) comprenant en outre un ou plusieurs obstacles (1653) à l'écoulement d'air dans la cavité (1657) entre la feuille d'anode (180) et la feuille de cathode (1682) afin d'augmenter la pression du réfrigérant/oxydant au niveau des ouvertures d'entrée (1658) et trois voies d'écoulement entre l'au moins un orifice d'entrée de réfrigérant/oxydant et l'orifice de sortie de réfrigérant/oxydant :
un premier trajet d'écoulement (1655, 1651) qui est entièrement enfermé à la fois par la feuille d'anode (180) et par la feuille de cathode (1682), le premier trajet d'écoulement se heurtant à le ou les obstacles (1653) ;
un deuxième trajet d'écoulement (1656) qui est entièrement enfermé à la fois par la feuille d'anode (180) et par la feuille de cathode (1682), le deuxième trajet d'écoulement ne se heurtant pas à le ou les obstacles (1653) et fournissant un canal de refroidissement traversant ; et
un troisième chemin d'écoulement (1655, 1660, 1652) pour traverser l'ouverture d'entrée d'air (1658) dans le premier canal d'écoulement de fluide (1606a) de la feuille de cathode (1682) et les ouvertures de sortie d'air (1654) dans le second fluide un canal d'écoulement (1606b) dans la feuille de cathode (1682) de manière à exposer le réfrigérant/oxydant à la surface de cathode de la feuille de cathode.

2. Plaque bipolaire (1600) selon la revendication 1, dans laquelle la structure de distribution de réfrigérant/oxydant comprend un canal d'écoulement de fluide (106) s'étendant entre l'ouverture d'entrée (1658) et l'ouverture de sortie (1654).

3. Plaque bipolaire (1600) selon la revendication 1, dans laquelle le ou les obstacles à l'écoulement d'air comprennent un déflecteur (1653).

4. Plaque bipolaire (1600) selon l'une quelconque des revendications 1 à 3, dans laquelle les dimensions des canaux d'écoulement de fluide varient le long de la plaque bipolaire (1600) et/ou sur la largeur de la plaque bipolaire (1600).

5. Plaque bipolaire (1600) selon l'une quelconque des revendications 1 à 4, dans laquelle la partie profilée bute contre la feuille d'anode (180), fournissant ainsi un support pour la cavité (1657) entre la feuille d'anode (180) et la feuille de cathode (1682).

6. Plaque bipolaire (1600) selon l'une quelconque des revendications 1 à 5, dans laquelle l'au moins un orifice d'entrée de réfrigérant/oxydant comprend un bord périphérique ouvert de la cavité (1657) entre la feuille d'anode (180) et la feuille de cathode (1682).

7. Plaque bipolaire (1600) selon l'une quelconque des revendications 1 à 6, dans laquelle l'au moins un orifice de sortie de réfrigérant/oxydant comprend un bord périphérique ouvert de la cavité (1657) entre la feuille d'anode (180) et la feuille de cathode (1682).

8. Plaque bipolaire (1600) selon l'une quelconque des revendications 1 à 7, dans laquelle la feuille de cathode (1682) comprend des cannelures de feuille de cathode (694) s'étendant le long de ses bords longitudinaux et la feuille d'anode (180) comprend des cannelures de feuille d'anode (692) le long de ses bords longitudinaux, dans laquelle les cannelures de feuille de cathode (694) butent contre les cannelures de feuille d'anode (692) définissant ainsi une pluralité d'orifices d'entrée de réfrigérant/oxydant vers la cavité (1657) et une pluralité d'orifices de sortie de réfrigérant/oxydant depuis la cavité (1657).

9. Plaque bipolaire (1600) selon l'une quelconque des revendications 1 à 4, dans laquelle la taille des ouvertures (1658, 1654) dans la feuille de cathode (1682) varie le long de la longueur de la plaque bipolaire (1600).

10. Assemblage de plaque de pile à combustible (400) comprenant :
une plaque bipolaire (1600) selon l'une quelconque des revendications précédentes ;
une couche de diffusion de fluide d'anode (210) ; et
une couche stratifiée (418) comprenant une couche de diffusion de fluide de cathode et un ensemble d'électrode de membrane comprenant une électrode.

11. Empilement de piles à combustible (1361) comprenant plusieurs assemblages de plaque de pile à combustible (400) de la revendication 10.
